(19) Europäisches Patentamt
European Patent Office
Office européen des brevets

(11) **EP 1 235 635 B1**

(12) **FASCICULE DE BREVET EUROPEEN**

(45) Date de publication et mention
de la délivrance du brevet:
**16.08.2006 Bulletin 2006/33**

(51) Int Cl.:
**B01D 61/16** (2006.01)     **B01D 65/08** (2006.01)
**C02F 1/44** (2006.01)

(21) Numéro de dépôt: **00981441.9**

(22) Date de dépôt: **20.11.2000**

(86) Numéro de dépôt international:
**PCT/FR2000/003216**

(87) Numéro de publication internationale:
**WO 2001/039869 (07.06.2001 Gazette 2001/23)**

(54) **PROCEDE DE FILTRATION MEMBRANAIRE DE LIQUIDES ET DISPOSITIF DE MISE EN OEUVRE DUDIT PROCEDE**

VERFAHREN ZUR MEMBRANFILTRATION VON FLÜSSIGKEITEN UND VORRICHTUNG ZUR DURCHFÜHRUNG DIESES VERFAHRENS

METHOD FOR MEMBRANE FILTRATION OF LIQUIDS AND DEVICE THEREFOR

(84) Etats contractants désignés:
**AT BE CH CY DE DK ES FI FR GB GR IE IT LI LU MC NL PT SE TR**

(30) Priorité: **03.12.1999 FR 9915709**

(43) Date de publication de la demande:
**04.09.2002 Bulletin 2002/36**

(73) Titulaire: **Degremont S.A.**
**92500 Rueil-Malmaison Cédex (FR)**

(72) Inventeurs:
• CORDIER, Michel
  **F-92000 Nanterre (FR)**
• BONNELYE, Véronique
  **F-78990 Elancourt (FR)**
• APTEL, Philippe
  **F-31700 Toulouse (FR)**
• GUIGUI, Christelle
  **F-31300 Toulouse (FR)**

• ROUCH, Jean-Christophe
  **F-31450 Montbrun Lauragais (FR)**

(74) Mandataire: **Debay, Yves**
  **Cabinet Debay,**
  **126 Elysée 2**
  **78170 La Celle Saint Cloud (FR)**

(56) Documents cités:
  WO-A-97/30779         WO-A-99/22850
  FR-A- 2 628 337        NL-C- 1 006 502
  US-A- 5 204 002        US-A- 5 271 830
  US-A- 5 505 841        US-A- 5 626 758

• GUIGUI C ET AL: "The use of Dean vortices in coiled hollow-fibre ultrafiltration membranes for water and wastewater treatment" DESALINATION,NL,ELSEVIER SCIENTIFIC PUBLISHING CO, AMSTERDAM, vol. 118, no. 1-3, 20 septembre 1998 (1998-09-20), pages 73-79, XP004139068 ISSN: 0011-9164

## Description

La présente invention concerne un procédé de filtration membranaire de liquides et son dispositif de mise en oeuvre et plus particulièrement un procédé de filtration par membranes, de liquides contenant des substances organiques dissoutes et des matières en suspension, telles que des eaux brutes, en présence d'un adsorbant.

De nombreux dispositifs utilisent des membranes de microfiltration, d'ultrafiltration ou de nanofiltration pour l'épuration des eaux. Ces membranes sont constituées soit de fibres capillaires, soit de films plans.

Afin d'augmenter la densité de flux de transfert de matière au travers de la membrane, certains dispositifs utilisent une membrane formant un canal incurvé. Lorsqu'un fluide circule dans un canal incurvé, des écoulements secondaires perpendiculaires à l'axe principal de l'écoulement apparaissent en raison de la différence de pression qui existe entre la paroi interne et la paroi externe du coude : l'effet global est la formation de vortex, appelés vortex de Dean. Cet écoulement complexe et stationnaire est connu et permet d'obtenir des améliorations significatives des phénomènes de transfert de chaleur ou de matière. En particulier de nombreux dispositifs ont déjà été décrits pour montrer l'intérêt des vortex de Dean dans des opérations de séparation membranaire, afin d'augmenter la densité de flux de transfert de matière au travers de membranes constituant la paroi du canal incurvé. L'amélioration du flux est expliquée par le fait que les vortex de Dean augmentent le gradient de vitesse à la paroi, provoquant un phénomène de cisaillement supplémentaire qui s'oppose à l'accumulation des composés à l'interface membrane-fluide et diminue donc les résistances au transfert. Ainsi les phénomènes limitants, comme la polarisation de concentration ou les dépôts de substances insolubles, sont moins intenses que lorsque le fluide circule dans une membrane formant un canal de géométrie droite.

Il est ainsi connu par le document WO 99/22850 un procédé de filtration de liquides utilisant des membranes à fibres creuses de flitration permettant de former des vortex de Dean.

Il est connu par le brevet FR 2 628 337 déposé par la Demanderesse, d'associer au traitement sur membranes proprement dit, un adsorbant en suspension, tel qu'une poudre de charbon actif par exemple, circulant dans une membrane capillaire. L'adsorbant est introduit dans la boucle de filtration ou circuit de recirculation comprenant une membrane filtrante délimitant un canal rectiligne. De tels adsorbants permettent de fixer efficacement les matières organiques, telles que les pesticides, les composés halogénés, ou les oxydes métalliques solubles, par exemple, dont le poids moléculaire est trop faible pour qu'ils soient retenus par la membrane et de coloniser des bactéries épuratices alors que, par ailleurs, la membrane oppose une barrière absolue aux matières en suspension, colloïdes, bactéries et adsorbants en poudre. Le couplage du traitement sur membranes avec l'injection de poudre de matériaux adsorbants dans le circuit de recirculation présente l'avantage de combiner deux, voire trois, actions épuratrices en une seule étape de traitement. La présence d'adsorbant dans le circuit de recirculation nécessite de disposer d'une énergie de balayage plus importante que dans le cas des traitements conventionnels, et ce, afin de prévenir l'accumulation excessive d'adsorbant en poudre sur la membrane, accumulation qui a pour conséquence de réduire le flux de filtration et qui peut conduire à l'obstruction des canaux.

Le but de l'invention est de proposer un procédé de traitement de fluides permettant d'améliorer d'une part les flux au travers de la membrane et d'autre part les rendements d'élimination des composés solubles par lesdites membranes.

Ce but est atteint par le fait que le procédé de filtration membranaire de liquides contenant des substances organiques dissoutes et des matières en suspension comprend une étape de mélange du liquide à traiter avec au moins un adsorbant pulvérulent, une étape d'introduction du mélange dans un circuit incluant un module de filtration et une étape de filtration dans ledit circuit, au travers d'une membrane de configuration géométrique formant un canal incurvé permettant d'induire un écoulement avec des vortex de Dean.

Selon une autre particularité, l'écoulement dans la membrane se caractérise par un nombre de Dean supérieur à 20.

Selon une autre particularité, le procédé de filtration membranaire de liquides comprend :

- une étape de mélange du liquide à traiter avec le ou les adsorbant(s) à une concentration déterminée, ,
- une étape d'introduction du mélange, à un débit de gavage déterminé, dans une boucle de filtration,
- une étape de filtration, dans la boucle, à une vitesse de balayage déterminée et un flux transmembranaire régulé à travers la membrane sous une forme géométrique formant un canal incurvé,
- une étape de récupération de l'eau filtrée,
- et une étape de purge hors de la boucle de filtration du concentrat obtenu à la sortie de la filtration.

Selon une autre particularité, le procédé comprend une étape préalable de coagulation, par un sel métallique du liquide à traiter.

Selon une autre particularité, le procédé de filtration membranaire de liquides comprend une étape de séparation du concentrat purgé pour extraire le liquide et concentrer l'adsorbant.

Selon une autre particularité, le procédé de filtration membranaire de liquides comprend une étape de réinjection dans la boucle du liquide et/ou de l'adsorbant extrait du concentrat.

Selon une autre particularité, le facteur de concentration entre la concentration du mélange injecté et la concentration du mélange dans la boucle varie entre 10 et 100.

Selon une autre particularité, le procédé de filtration membranaire de liquides comprend une étape d'injection d'un réactif déterminé, gazeux ou liquide, dans la boucle, pour assurer un traitement supplémentaire en utilisant l'adsorbant du mélange comme support bactérien mobile.

Un deuxième but de l'invention est de proposer un dispositif de mise en oeuvre du procédé.

Ce but est atteint par le fait que le dispositif de filtration membranaire de liquides contenant des substances organiques dissoutes et des matières en suspension, comprend un mélangeur présentant deux canalisations d'entrée pour l'introduction du liquide à traiter et un adsorbant, une pompe de gavage reliée par une canalisation au mélangeur permettant d'injecter le mélange effectué par le mélangeur dans une boucle de filtration comprenant une pompe de circulation et un module de filtration, le module de filtration comprenant une membrane, scellée dans un carter, sous une forme géométrique formant un canal incurvé, une canalisation reliée au carter pour récupérer le liquide filtré et une canalisation de purge disposée en aval du module de filtration pour purger le concentrat.

Selon une autre particularité, la membrane est constituée de fibres capillaires.

Selon une autre particularité, les membranes sous forme de fibres capillaires forment des canaux hélicoïdaux, sinusoïdaux ou torsadés.

Selon une autre particularité, l'arrangement des membranes se présente sous forme de faisceaux de capillaires mono-brins ou de juxtaposition d'ensembles monoblocs multicapillaires à section circulaire ou en ruban.

Selon une autre particularité, la membrane est une membrane dite spirale, constituée de films plans.

Selon une autre particularité, le ou les canaux de la membrane sont de section circulaire.

Selon une autre particularité, le ou les adsorbants sont des composés compris dans le groupe constitué par le charbon actif, les résines adsorbantes, les oxydes et hydroxydes minéraux, et les bentonites.

Selon une autre particularité, la canalisation de purge est reliée à des moyens de récupération comprenant un séparateur permettant de concentrer l'adsorbant, le séparateur comprenant au moins deux canalisations, l'une reliée au mélangeur pour recycler le liquide extrait du concentrat par le séparateur, l'autre pour évacuer l'adsorbant extrait du concentrat vers une cuve de stockage.

Selon une autre particularité, la cuve de stockage comprend une canalisation reliée au mélangeur permettant de réalimenter la boucle de filtration avec l'adsorbant extrait.

Selon une autre particularité, la boucle de filtration comprend un dispositif d'injection ou de dissolution d'un réactif déterminé pour favoriser l'activité biologique.

La combinaison des effets des vortex de Dean, engendrés par l'utilisation de membranes sous forme géométrique formant canal incurvé, et la présence d'un adsorbant permet à la fois d'améliorer les flux de transfert, d'éliminer, au moins en partie, les composés qui se fixent sur l'adsorbant et ou qui sont consommés par les bactéries qui colonisent l'adsorbant.

D'une manière surprenante il a été trouvé que, d'une part, en comparaison avec le dispositif enseigné par le brevet FR 2 628 337, les effets de vortex de Dean permettent d'utiliser une concentration plus importante d'adsorbant en suspension, sans boucher les capillaires, ce qui autorise une épuration plus poussée et que d'autre part, l'effet vortex, combiné à la présence de l'adsorbant en suspension, permet d'obtenir des flux encore supérieurs à ceux observés en présence du seul effet vortex, et ce, probablement grâce à l'action mécanique de l'adsorbant en poudre qui exerce une érosion continue sur le gâteau d'adsorbant et de matières organiques qui aurait tendance à s'accumuler à la surface de la membrane et qui en minimise l'épaisseur.

De plus, l'élimination des composés organiques est supérieure à celle obtenue dans un dispositif où les membranes délimitent un canal rectiligne, peut être grâce à l'efficacité de mélange résultant de l'effet vortex induit dans la membrane incurvée et à la masse d'adsorbant dans le système assurant à la fois l'adsorption et la colonisation des bactéries.

En comparaison avec un dispositif conventionnel, équipé de membranes de configuration géométrique tubulaire et rectiligne, un dispositif à membranes incurvées dans lequel circule une suspension d'adsorbant autorise un flux supérieur de 60 à 150 % selon la nature de l'eau à traiter et une concentration d'adsorbant dans la boucle pouvant aller jusqu'à 1 g/l grâce à l'effet vortex. Cette forte concentration permet d'une part, une meilleure utilisation de l'adsorbant car son temps de séjour dans la boucle est augmenté, ce qui permet d'utiliser au mieux son pouvoir adsorbant et de réduire la quantité introduite, et d'autre part, un meilleur rendement d'élimination de la matière organique par voie biologique, l'adsorbant agissant comme support bactérien pour éliminer biologiquement certains composés organiques et/ou l'ammoniaque ou les nitrates.

D'autres particularités et avantages de la présente invention apparaîtront plus clairement à la lecture de la description ci-après faite en référence aux dessins annexés dans lesquels :

- la figure 1 représente schématiquement le dispositif de traitement des eaux selon l'invention,
- la figure 2 représente schématiquement une variante du dispositif illustré à la figure 1 ;
  les figures 3A, 3B et 3C représentent schématiquement des exemples de géométries de membrane de filtration selon l'invention ;
- les figures 4A, 4B et 4C représentent des exemples de fibres capillaires selon l'invention.

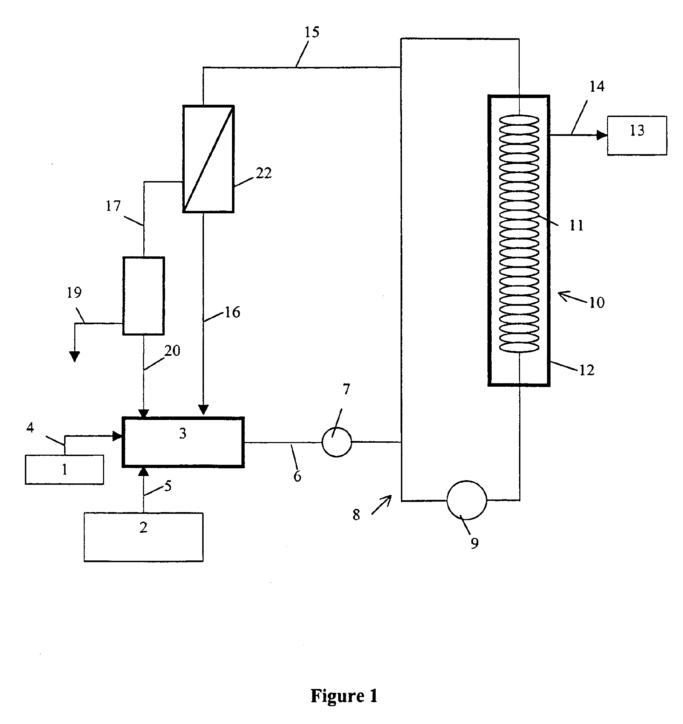

En référence à la figure 1, l'eau brute (1), à traiter préalablement ou non coagulée avec un sel métallique, est mélangée avec un ou plusieurs matériaux adsorbants (2) pulvérulents, dans une cuve de mélange (3), appelée mélangeur. L'eau brute (1) est introduite par une canalisation (4) dans le mélangeur à un débit déterminé. Cette étape de mélange peut être obtenue par un moyen quelconque, tel que par exemple un mélangeur statique, un éjecteur, ou une cuve munie d'une agitation mécanique.

L'adsorbant (2) en poudre est injecté dans le mélangeur (3) par une canalisation (5) au moyen d'un système doseur quelconque, non représenté. L'adsorbant (2) pulvérulent est, par exemple, constitué de charbon actif en poudre, de résine macroporeuse, de bentonite, d'oxydes ou hydroxides métalliques ou de tout autre composé insoluble ayant des propriétés adsorbantes.

La quantité d'adsorbant injecté dans le mélangeur pour obtenir une suspension ou mélange a une concentration d'adsorbant déterminée, par exemple de 10 mg/l.

L'eau brute est maintenue en contact avec l'adsorbant pendant une durée minimum, appelée temps de contact. Ce temps de contact varie de quelques secondes à 10 minutes selon la nature de l'eau à traiter et le dispositif de mélange retenu.

La suspension est ensuite pompée par une canalisation (6) au moyen d'une pompe dite de gavage (7) vers une boucle de filtration (8) ou circuit de recirculation. La boucle (8) de filtration comporte une autre pompe (9), dite de circulation, et un module de filtration (10). Le module de filtration comprend une membrane capillaire (11) scellée dans un carter (12). Le rôle de la pompe de circulation (9) est d'assurer une vitesse requise dite de balayage, dans le canal de la membrane capillaire. L'eau traitée (13), ou perméat, est recueillie, par une canalisation (14) reliée au carter après percolation au travers de la membrane (11).

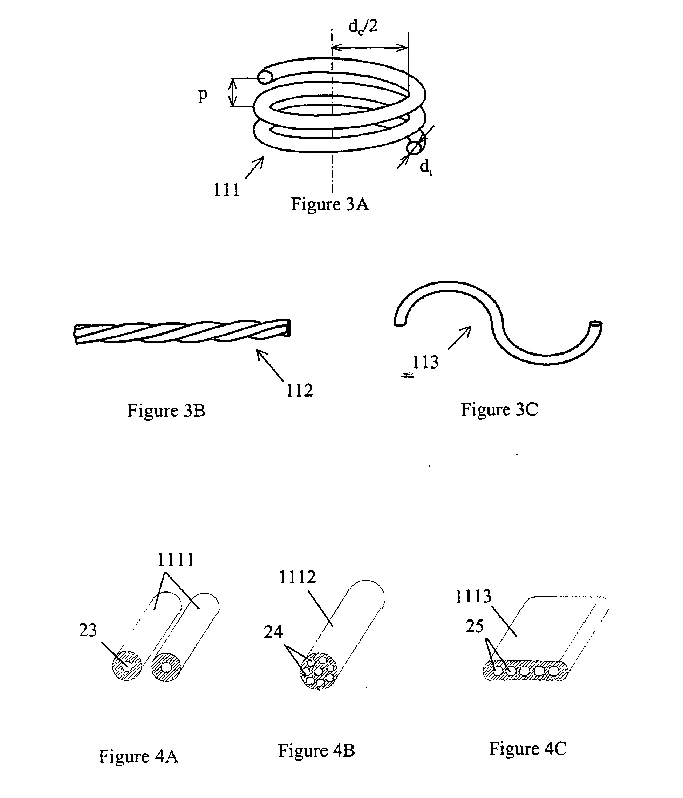

La membrane (11), de type microfiltration ou ultrafiltration ou nanofiltration, est par exemple constituée d'un ensemble de membranes capillaires ou fibres capillaires creuses, fabriquées sous une forme géométrique formant canal incurvé. La géométrie incurvée de la membrane permet ainsi d'engendrer des vortex de Dean. La membrane peut par exemple former un canal incurvé de forme hélicoïdale (111), torsadée (112) ou sinusoïdale (113) tel que représenté respectivement à la figure 3A, 3B, et 3C. Les membranes ou fibres capillaires constituant la membrane peuvent être arrangées sous différentes formes. Suivant la figure 4A, l'arrangement des fibres capillaires peut se présenter sous forme de faisceaux de monobrins. La membrane est constituée d'un ensemble de fibres (1111) capillaires présentant chacune un seul canal (23). L'arrangement des fibres capillaires peut se présenter sous forme de juxtaposition d'ensembles monoblocs multicapillaires à section circulaire (1112) tel que représenté à la figure 4B ou sous forme de juxtaposition d'ensembles monobloc multicapillaires en ruban (1113) tel que représenté à la figure 4C. Dans ces deux dernier cas, la membrane est constituée de fibres capillaires (1112, 1113) présentant chacune plusieurs canaux (24, 25). Les canaux incurvés des fibres capillaires peuvent être de section circulaire. Selon un autre mode de réalisation la membrane est constituée de films plan incurvés, traditionnellement appelée membrane spirale.

Le paramètre de contrôle des écoulements dans les coudes du canal incurvé est le nombre de Dean (De), qui représente le rapport des forces centrifuge et d'inertie par rapport aux forces visqueuses. Il est défini par l'équation 1 suivante :

$$\text{De} \;=\; \text{Re} \sqrt{\frac{d_i}{d_c}}$$

dans laquelle, "Re" représente le nombre de Reynolds, "$d_i$" représente le diamètre interne de la conduite et "$d_c$" le diamètre de courbure, "$d_i$" et "$d_c$" étant exprimés en mètre.

Cette définition de "De" n'est plus valable si la conduite incurvée présente une torsion non négligeable, c'est le cas en particulier de conduites de forme hélicoïdale (111), torsadée (112) ou sinusoïdale (113) telles que représentées aux figures 3A, 3B et 3C. Afin de prendre en compte l'effet de la torsion, un diamètre effectif de courbure d'c est défini par l'équation 2 suivante:

$$d'_c = d_c \left[ 1 + \left( \frac{p}{\pi d_c} \right)^2 \right]$$

où "p" est le pas en mètre.

Ceci conduit à la définition du nombre de Dean modifié (De') selon l'équation 3 suivante :

$$\text{De}' \;=\; \text{Re} \sqrt{\frac{d_i}{d'_c}}$$

Dans la pratique, $d'_c$ est peu différent de $d_c$ lorsque le pas est petit devant $d_c$

Dans la suite nous appellerons nombre de Dean, le nombre défini par l'une ou l'autre des équations 1 ou 3, sachant que la torsion doit être prise en compte lorsque le pas p n'est plus petit devant $d_c$.

La vitesse de balayage et la géométrie de la membrane seront déterminées afin d'engendrer des perturbations suffisantes. Cette valeur minimale des perturbations correspond à un nombre de Dean (De) compris entre 20 et 500.

Le mélange ou suspension est pompé par la pompe (7) de gavage avec un débit sensiblement identique à celui de l'eau brute (1) entrant dans le mélangeur (3) et à une pression correspondant à la perte de charge maximale prévue pour le passage au travers de la membrane. La pompe (9) de circulation permet de maintenir une vitesse de balayage constante dans les membranes capillaires, à une pression égale à la perte de charge dans la membrane, augmentée de la pression de refoulement de la pompe de gavage.

La fraction concentrée, ou concentrat, sortant du module (10) de filtration est purgée de façon continue ou discontinue, pour extraire une quantité d'adsorbant équivalente à la quantité d'adsorbant (2) neuf qui est introduit dans le mélangeur (3). Cette opération permet de maintenir dans la boucle une concentration constante d'adsorbant, conformément aux conditions opératoires déterminées. La concentration en adsorbant dans la boucle est directement proportionnelle au rapport du débit de gavage sur le débit de concentrat évacué. Ce facteur de concentration est de l'ordre de 10 à 100 selon les applications. Le concentrat est extrait de la boucle par une canalisation (15) de purge disposée en aval du module (10) de filtration vers des moyens de récupération. Ces moyens de récupération comprennent un séparateur (22) tel qu'un décanteur, un filtre à bande ou une centrifugeuse par exemple, dont le rôle est d'augmenter la concentration dudit concentrat. L'eau extraite du concentrat par le séparateur (22) peut être recyclée en l'injectant, par une canalisation (16) dans le mélangeur (3) avec l'eau (1) brute à traiter.

L'adsorbant extrait du concentrat, appelé adsorbant recyclé, peut être stocké dans une cuve (18) par l'intermédiaire d'une canalisation (17). Selon la nature de l'eau à traiter et le degré de saturation de l'adsorbant, celui-ci peut soit être évacué du dispositif par une canalisation (19) pour être détruit, soit être utilisé pour réalimenter la boucle (8) de filtration en l'injectant par une canalisation (20) dans le mélangeur (3).

En effet, même si le procédé à membrane incurvée réduit considérablement les effets de colmatage liés à l'accumulation d'un dépôt sur la membrane, il n'en reste pas moins qu'il convient de réaliser de façon épisodique un lavage de la membrane. Ce lavage peut être effectué par une opération de rétrolavage, qui consiste à renvoyer le perméat à contre-sens, en additionnant éventuellement un produit chimique, comme le chlore ou l'eau de Javel.

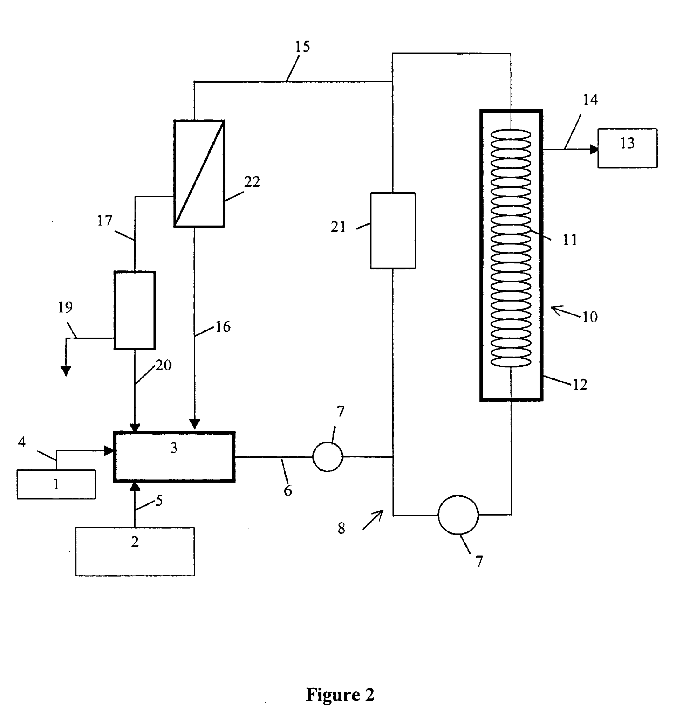

En référence à la figure 2, un dispositif (21) d'injection ou de dissolution d'un réactif peut être ajouté sur la boucle de filtration afin de favoriser les réactions biologiques. A titre d'exemple, le dispositif (21) permet soit d'injecter du méthanol ou de l'éthanol pour réaliser une dénitrification, soit de dissoudre de l'oxygène, par injection d'air ou d'oxygène pur, pour nitrifier les composés ammoniacaux.

Selon un exemple de réalisation non limitatif, l'eau (1) venant d'un traitement biologique et préalablement coagulée par du chlorure ferrique est introduite, à un débit de 10 m3/h, dans le mélangeur (3) où est injecté du charbon actif en poudre pour obtenir une concentration de 10 mg/l après mélange. Le temps de contact est fixé à 3 minutes. Le mélange est ensuite pompé par la pompe (7) de gavage avec un débit de 10 m3/h et à une pression correspondant à la perte de charge maximale prévue pour la circulation dans le canal de la membrane, soit pour l'exemple, 1 bar. La pompe (9) de circulation maintient une vitesse de 1 m/s dans les membranes capillaires, à une pression égale à la perte de charge dans les membranes augmentée de la pression de refoulement de la pompe de gavage, soit au total 1,5 bar. La surface de membrane (11) est par exemple de 70 m2. Grâce à l'utilisation de membranes incurvées, le flux de perméat (13) au travers de la membrane est de 150 l/h.m2 pour une pression de 1 bar et une température de 20 °C.

Le facteur de concentration en adsorbant qui, dans ce cas, est de 50, permet de maintenir une concentration en charbon actif à l'équilibre de 500 mg/l. Le concentrat, évacué à cette concentration de 500 mg/l, transite par un séparateur (22) constitué d'un décanteur lamellaire, dimensionné à 4 m/h, permettant d'extraire le charbon actif à une concentration d'environ 50 g/l. L'eau décantée est ensuite renvoyée dans le mélangeur (3) avec l'eau à traiter. L'extraction du charbon actif du décanteur représente un débit moyen de 2 l/h. Ainsi, le débit entrant étant de 10 m3/h, la perte d'eau lors de l'extraction est limitée à moins de 0,02%.

Grâce à l'effet vortex, le dépôt sur la membrane (11) reste très faible et le temps de filtration sans lavage ou rétrolavage est supérieur ou égal à 24 heures. Un système à membrane rectiligne nécessite, dans des conditions opératoires identiques, un lavage toutes les heures pendant 30 secondes.

Le temps de rétrolavage journalier, cumulé, est, au maximum de 3 minutes, à un débit de perméat chloré représentant 2 fois le flux de production, soit six minutes de production sur une période de 24 heures, puis on assure un contact de quelques minutes avant de vidanger pour reprendre la production. L'ensemble des pertes d'eau dans le dispositif selon l'invention, incluant l'arrêt de production pendant lavage et l'eau de lavage ainsi que l'extraction du charbon en fond de séparateur, s'établit à moins de 3 %, valeur qui se compare avantageusement aux 5 à 10 % généralement pratiqués sur les systèmes à membranes rectilignes utilisés dans les mêmes conditions.

La vidange initiale de la boucle peut être réutilisée pour remplir la boucle avant de démarrer un nouveau cycle de production. Ce recyclage du charbon biologiquement ensemencé, stocké à la vidange, permet d'avoir immédiatement après un lavage une concentration de charbon de 500 mg/l, qui participe à l'épuration et confère l'efficacité optimum dès le redémarrage du dispositif.

Le procédé selon l'invention, en améliorant le taux de transfert à travers la membrane, permet de réduire la surface de membrane par un facteur supérieur à 1,5 et de réduire l'ouvrage de séparation du charbon par un facteur 5. La meilleure utilisation du charbon actif permet de réduire la quantité de charbon neuf introduite dans l'eau à traiter. A titre d'exemple, par rapport à un procédé utilisant une membrane rectiligne et un mélange à 10 mg/l, le procédé selon l'invention présente la même efficacité avec un mélange à 8 mg/l. Le coût d'investissement global du dispositif est réduit de 30% et le coût d'exploitation (charbon actif et énergie), de 10 %, la membrane incurvée créant une perte de charge supplémentaire, donc une dépense d'énergie à déduire de l'économie sur le charbon actif. Les avantages constatés sont surprenants, puisqu'à consommation énergétique légèrement supérieure, une économie substantielle est réalisée sur la surface de membrane installée, sur la consommation d'adsorbant mise en oeuvre, tout en obtenant une même qualité de l'eau sortant du procédé et en minimisant la perte d'eau globale. Suivant la nature de l'eau à traiter, de fortes concentrations d'adsorbant pulvérulent pourront être utilisées dans des membranes capillaires, sans colmatage ni bouchage.

Les applications potentielles d'une telle combinaison vortex de Dean / injection et recirculation de produits adsorbants en poudre, sont, à titre non limitatif, le traitement de l'eau pour potabilisation, le recyclage des eaux usées après traitement biologique, la concentration de produits valorisables et plus généralement le traitement de liquides chargés.

**Revendications**

1. Procédé de filtration membranaire de liquides (1) contenant des substances organiques dissoutes et des matières en suspension, comprenant :

    - une étape de mélange du liquide à traiter avec au moins un adsorbant (2) pulvérulent,
    - une étape d'introduction du mélange dans un circuit incluant un module de filtration (10), et
    - une étape de filtration dans ledit circuit, au travers d'une membrane de configuration géométrique formant un canal incurvé permettant d'induire un écoulement avec des vortex de Dean.

2. Procédé de filtration membranaire de liquides selon la revendication 1, **caractérisé en ce que** l'écoulement dans la membrane se **caractérise par** un nombre de Dean (De) supérieur à 20.

3. Procédé de filtration membranaire de liquides selon la revendication 1 ou 2, **caractérisé en ce qu'**il comprend :

    - une étape de mélange du liquide (1) à traiter avec l'adsorbant (2) à une concentration déterminée,
    - une étape d'introduction du mélange, à un débit de gavage déterminé, vers une boucle (8) de filtration,
    - une étape de filtration, dans la boucle de recirculation, à une vitesse de balayage déterminée et un flux transmembranaire régulé au travers de la membrane sous une forme géométrique formant un canal incurvé,
    - une étape de récupération du liquide filtré (13),
    - une étape de purge hors de la boucle de filtration, du concentrat obtenu à la sortie de la filtration.

4. Procédé de filtration membranaire de liquides selon la revendication 5, **caractérisé en ce qu'**il comprend une étape préalable de coagulation par un sel métallique du liquide à traiter.

5. Procédé de filtration membranaire de liquides selon la revendication 3 ou 4, **caractérisé en ce qu'**il comprend une étape de séparation du concentrat purgé pour extraire le liquide et concentrer l'adsorbant.

6. Procédé de filtration membranaire de liquides selon la revendication 5, **caractérisé en ce qu'**il comprend une étape de réinjection dans la boucle du liquide et/ou de l'adsorbant extrait du concentrat.

7. Procédé de filtration membranaire de liquides selon l'une des revendications 3 à 6, **caractérisé en ce que** le facteur de concentration entre la concentration du mélange injecté et la concentration du mélange dans la boucle varie entre 10 et 100.

8. Procédé de filtration membranaire de liquides selon l'une des revendications 3 à 7, **caractérisé en ce qu'**il comprend une étape d'injection d'un réactif déterminé gazeux ou liquide dans la boucle, pour assurer un traitement supplémentaire en utilisant l'adsorbant du mélange comme support bactérien mobile.

9. Dispositif de filtration membranaire de liquides contenant des substances dissoutes et des matières en suspension, comprenant :

    - un mélangeur (3) présentant deux canalisations (4, 5) d'entrée pour l'introduction respective du liquide (1) à traiter et d'un adsorbant (2),
    - une boucle (8) de filtration comprenant une pompe (9) de circulation et un module (10) de filtration,
    - une pompe (7) de gavage reliée par une canalisation (6) au mélangeur (3) permettant d'injecter le mélange effectué par le mélangeur dans la boucle (8) de filtration,

le module de filtration comprenant une membrane (11), scellée dans un carter (12) et sous une forme géométrique de canal incurvé, une canalisation (14) étant reliée au carter pour récupérer le liquide (13) filtré et une canalisation (15) de purge étant disposée en aval du module de filtration pour purger le concentrat.

**10.** Dispositif de filtration membranaire de liquides selon la revendication 9, **caractérisé en ce que** la membrane est constituée de fibres capillaires.

**11.** Dispositif de filtration membranaire de liquides selon la revendication 10, **caractérisé en ce que** les membranes sous forme de fibres capillaires forment des canaux hélicoïdaux, sinusoïdaux ou torsadés.

**12.** Dispositif de filtration membranaire de liquides selon la revendication 10 ou 11, **caractérisé en ce que** l'arrangement des fibres capillaires se présente sous forme de faisceaux de capillaires mono-brins (1111) ou de juxtaposition d'ensembles monoblocs multicapillaires à section circulaire (1112) ou en ruban (1113).

**13.** Dispositif de filtration membranaire de liquides selon la revendication 9, **caractérisé en ce que** la membrane est une membrane dite spirale constituée de films plans.

**14.** Dispositif de filtration membranaire de liquides selon l'une des revendications 9 à 13, **caractérisé en ce que** le ou les canaux de la membrane sont de section circulaire.

**15.** Dispositif de filtration membranaire de liquides selon l'une des revendications 9 à 14, **caractérisé en ce que** le ou les adsorbants sont des composés compris dans le groupe constitué par le charbon actif, les résines adsorbantes, les oxydes et hydroxydes minéraux, et les bentonites.

**16.** Dispositif de filtration membranaire de liquides selon l'une des revendications 9 à 15, **caractérisé en ce que** la canalisation (15) de purge est reliée à des moyens de récupération comprenant un séparateur (22) permettant de concentrer l'adsorbant, le séparateur comprenant au moins deux canalisations, l'une (16) reliée au mélangeur (3) pour recycler le liquide extrait du concentrat par le séparateur (22), l'autre (19, 20) pour évacuer l'adsorbant extrait du concentrat vers une cuve (18) de stockage.

**17.** Dispositif de filtration membranaire de liquides selon la revendication 16, **caractérisé en ce que** la cuve de stockage comprend une canalisation (20) reliée au mélangeur (16) permettant de réalimenter la boucle (8) de filtration avec l'adsorbant extrait.

**18.** Dispositif de filtration membranaire de liquides selon l'une des revendications 9 à 17, **caractérisé en ce que** la boucle de filtration comprend un dispositif (21) d'injection ou de dissolution d'un réactif déterminé dans le mélange pour favoriser l'activité biologique.

**Claims**

**1.** Method of membrane filtration of liquids (1) containing dissolved organic substances and matter in suspension, comprising:

- a step of mixing the liquid to be processed with at least one pulverulent adsorbent (2),
- a step of introducing the mixture into a circuit including a filtration module (10), and
- a step of filtration in said circuit, through a membrane with a geometrical configuration forming a curved channel making it possible to induce a flow with Dean vortices.

**2.** Method of membrane filtration of liquids according to Claim 1, **characterised in that** the flow in the membrane is **characterised by** a Dean number (De) greater than 20.

**3.** Method of membrane filtration of liquids according to Claim 1 or 2, **characterised in that** it comprises:

- a step of mixing the liquid (1) to be processed with the adsorbent (2) at a given concentration,
- a step of introducing the mixture, with a given boost rate, towards a filtration loop (8),
- a step of filtration, in the recirculation loop, at a given flushing rate and a regulated transmembrane flow through the membrane in a geometrical shape forming a curved channel,
- a step of recovering the filtered liquid (13),
- a step of purging, out of the filtration loop, the concentrate obtained at the filtration outlet.

**4.** Method of membrane filtration of liquids according to Claim 5, **characterised in that** it comprises a preliminary step of coagulation by a metal salt of the liquid to be processed.

**5.** Method of membrane filtration of liquids according to Claim 3 or 4, **characterised in that** it comprises a step of separating the purged concentrate in order to extract the liquid and concentrate the adsorbent.

**6.** Method of membrane filtration of liquids according to Claim 5, **characterised in that** it comprises a step of re-injecting, into the loop, the liquid and/or adsorbent extracted from the concentrate.

**7.** Method of membrane filtration of liquids according to one of Claims 3 to 6, **characterised in that** the concentration factor between the concentration of the injected mixture and the concentration of the mixture in the loop varies between 10 and 100.

8. Method of membrane filtration of liquids according to one of Claims 3 to 7, **characterised in that** it comprises a step of injecting a given gaseous or liquid reagent into the loop, in order to ensure additional processing by using the adsorbent of the mixture as a mobile bacterial medium.

9. Membrane filtration device for liquids containing dissolved substances and matter in suspension, comprising:

- a mixer (3) having two inlet conduits (4, 5) for introducing the liquid (1) to be processed and an adsorbent (2), respectively,
- a filtration loop (8) comprising a circulation pump (9) and a filtration module (10),
- a booster pump (7) connected by a conduit (6) to the mixer (3) making it possible to inject the mixture produced by the mixer into the filtration loop (8),

the filtration module comprising a membrane (11), sealed in a housing (12) and with the geometrical shape of a curved channel, a conduit (14) being connected to the housing in order to recover the filtered liquid (13) and a purging conduit (15) being arranged downstream from the filtration module in order to purge the concentrate.

10. Membrane filtration device for liquids according to Claim 9, **characterised in that** the membrane is constituted by capillary fibres.

11. Membrane filtration device for liquids according to Claim 10, **characterised in that** the membranes, in the form of capillary fibres, form helical, sinusoidal or twisted channels.

12. Membrane filtration device for liquids according to Claim 10 or 11, **characterised in that** the arrangement of the capillary fibres takes the form of bundles of single-strand capillaries (1111) or the juxtaposition of one-piece multicapillary assemblies with a circular section (1112) or in ribbon form (1113).

13. Membrane filtration device for liquids according to Claim 9, **characterised in that** the membrane is a "spiral" membrane constituted by plane films.

14. Membrane filtration device for liquids according to one of Claims 9 to 13, **characterised in that** the channels of the membrane have a circular section.

15. Membrane filtration device for liquids according to one of Claims 9 to 14, **characterised in that** the adsorbents are compounds comprised within the group constituted by activated carbon, adsorbent resins, mineral oxides and hydroxides, and bentonites.

16. Membrane filtration device for liquids according to one of Claims 9 to 15, **characterised in that** the purging conduit (15) is connected to recovery means comprising a separator (22) making it possible to concentrate the adsorbent, the separator comprising at least two conduits, one (16) connected to the mixer (3) in order to recycle the liquid extracted from the concentrate by the separator (22), the other (19, 20) for discharging the adsorbent extracted from the concentrate to a storage tank (18).

17. Membrane filtration device for liquids according to Claim 16, **characterised in that** the storage tank comprises a conduit (20) connected to the mixer (16) making it possible to supply the extracted adsorbent back to the filtration loop (8).

18. Membrane filtration device for liquids according to one of Claims 9 to 17, **characterised in that** the filtration loop comprises a device (21) for injection or dissolution of a given reagent in the mixture in order to favour biological activity.

**Patentansprüche**

1. Verfahren zur Membranfiltration von Flüssigkeiten (1), die gelöste organische Substanzen und suspendierte Materialien enthalten, mit.

- einem Schritt zum Vermischen der zu behandelnden Flüssigkeit mit zumindest einem feinpulvrigen Adsorbens (2),
- einem Schritt zum Einführen der Mischung in einen Kreis, der ein Filtrationsmodul (10) einschließt, und
- einem Filtrationsschritt in diesem Kreis durch eine Membran mit einer geometrischen Konfiguration, die einen gekrümmten Kanal bildet, der es ermöglicht, eine Strömung mit Dean-Wirbeln zu induzieren.

2. Verfahren zur Membranfiltration von Flüssigkeiten nach Anspruch 1, **dadurch gekennzeichnet, dass** die Strömung in der Membran durch eine Dean-Zahl (De) größer als 20 charakterisiert ist.

3. Verfahren zur Membranfiltration von Flüssigkeiten nach Anspruch 1 oder 2, **dadurch gekennzeichnet, dass** es aufweist:

- einen Schritt zum Mischen der zu behandelnden Flüssigkeit (1) mit dem Adsorbens (2) mit einer bestimmten Konzentration,

- einen Schritt zum Einführen der Mischung in eine Filtrationsschleife (8) mit einer vorgegebenen Förderleistung,

- einen Filtrationsschritt in der Rezirkulationsschleife mit einer vorbestimmten Spülgeschwindigkeit und einem geregelten transmembranen Fluss durch die Membran mit einer geometrischen Form, die einen gekrümmten Kanal bildet,

- einen Schritt zum Rückgewinnen der gefilterten Flüssigkeit (13),

- einen Schritt zum Ablassen des am Ausgang der Filtration erhaltenen Konzentrates aus der Filtrationsschleife.

4. Verfahren zur Membranfiltration von Flüssigkeiten nach Anspruch 3, **dadurch gekennzeichnet, dass** es einen Vorabschritt zur Koagulation der zu behandelnden Flüssigkeit durch ein Metallsalz aufweist.

5. Verfahren zur Membranfiltration von Flüssigkeiten nach Anspruch 3 oder 4, **dadurch gekennzeichnet, dass** es einen Schritt zum Separieren des abgelassenen Konzentrates aufweist, um die Flüssigkeit abzuziehen und das Adsorbens zu konzentrieren.

6. Verfahren zur Membranfiltration von Flüssigkeiten nach Anspruch 5, **dadurch gekennzeichnet, dass** es einen Schritt zum Reinjizieren der Flüssigkeit und/oder des aus dem Konzentrat abgezogenen Adsorbens in die Schleife aufweist.

7. Verfahren zur Membranfiltration von Flüssigkeiten nach einem der Ansprüche 3 bis 6, **dadurch gekennzeichnet, dass** der Konzentrationsfaktor zwischen der Konzentration der injizierten Mischung und der Konzentration der Mischung in der Schleife zwischen 10 und 100 variiert.

8. Verfahren zur Membranfiltration von Flüssigkeiten nach einem der Ansprüche 3 bis 7, **dadurch gekennzeichnet, dass** es den Schritt aufweist, ein bestimmtes gasförmiges oder flüssige Reagens in die Schleife zu injizieren, um eine zusätzliche Behandlung zu erzielen, indem das Adsorbens der Mischung als mobiler Bakterienträger verwendet wird.

9. Verfahren zur Membranfiltration von Flüssigkeiten, die gelöste Substanzen und suspendierte Materialien aufweisen, mit:

- einem Mischer (3), der zwei Eingangsleitungen (4, 5) zum Einführen der zu behandelnden Flüssigkeit (1) beziehungsweise eines Adsorbens (2) aufweist,

- einer Filtrationsschleife, die eine Zirkulationspumpe (9) und ein Filtrationsmodul (10) aufweist,

- einer Förderpumpe (7), die über eine Leitung (6) mit dem Mischer (3) verbunden ist, um die im Mischer bereitete Mischung in die Filtrationsschleife (8) zu injizieren,

wobei das Filtrationsmodul eine Membran (11) aufweist, die in ein Gehäuse (12) eingesetzt ist und eine geometrische Form mit einem gekrümmten Kanal aufweist, wobei eine Leitung (14) mit dem Gehäuse verbunden ist, um die gefilterte Flüssigkeit (13) wiederzugewinnen, und eine Ablassleitung (15) stromabwärts des Filtrationsmodules vorgesehen ist, um das Konzentrat abzuführen.

10. Vorrichtung zur Membranfiltration von Flüssigkeiten nach Anspruch 9, **dadurch gekennzeichnet, dass** die Membran aus Kapillarfasern aufgebaut ist.

11. Vorrichtung zur Membranfiltration von Flüssigkeiten nach Anspruch 10, **dadurch gekennzeichnet, dass** die Membranen in Form von Kapillarfasern schraubenförmige, sinusförmige oder verdrillte Kanäle bilden.

12. Vorrichtung zur Membranfiltration von Flüssigkeiten nach Anspruch 10 oder 11, **dadurch gekennzeichnet, dass** die Anordnung der Kapillarfasern aus Bündeln aus monofaserigen Kapillaren (1111) oder durch Nebeneinander-Anordnen von multikapillaren Monoblock-Anordnungen mit einem kreisförmigen Querschnitt (1112) oder einem bandförmigen Querschnitt (1113) aufgebaut ist.

13. Vorrichtung zur Membranfiltration von Flüssigkeiten nach Anspruch 9, **dadurch gekennzeichnet, dass** die Membran eine aus ebenen Folien aufgebaute Spiralmembran ist.

14. Vorrichtung zur Membranfiltration von Flüssigkeiten nach einem der Ansprüche 9 bis 13, **dadurch gekennzeichnet, dass** der Kanal oder die Kanäle der Membran einen kreisförmigen Querschnitt aufweisen.

15. Vorrichtung zur Membranfiltration von Flüssigkeiten nach einem der Ansprüche 9 bis 14, **dadurch gekennzeichnet, dass** das Adsorbens oder die Adsorbentien Stoffe aus der Gruppe sind, die durch Aktivkohle, adsorbierende Harze, Mineraloxide und Mineralhydroxide, sowie Bentonite gebildet wird.

16. Vorrichtung zur Membranfiltration von Flüssigkeiten nach einem der Ansprüche 9 bis 15, **dadurch gekennzeichnet, dass** die Ablassleitung (15) mit einer Wiedergewinnungseinrichtung verbunden ist, die einen Separator (22) zum Konzentrieren des Adsorbens aufweist, wobei der Separator zumindest zwei Leitungen aufweist, wobei eine (16) mit dem Mischer (3) verbunden ist, um die aus dem Konzentrat durch den Separator (22) herausgezogene Flüssigkeit wiederzugewinnen, und die andere Leitung (19, 20) dazu dient, das aus dem Konzentrat herausgezogene Adsorbens in ein Vorratsgefäß (18) zu entleeren.

17. Vorrichtung zur Membranfiltration von Flüssigkeiten nach Anspruch 16, **dadurch gekennzeichnet, dass** das Vorratsgefäß eine Leitung (20) aufweist, die mit dem Mischer (3) verbunden ist, um die Filtrationsschleife (8) erneut mit dem extrahierten Adsorbens zu versorgen.

18. Vorrichtung zur Membranfiltration von Flüssigkeiten nach einem der Ansprüche 9 bis 17, **dadurch gekennzeichnet, dass** die Filtrationsschleife eine Einrichtung (21) aufweist, um ein bestimmtes Reagens in die Mischung zu injizieren oder in dieser aufzulösen. um die biologische Aktivität zu verbessern.

**Figure 1**

**Figure 2**

$d_c/2$

p

$d_i$

111

Figure 3A

112

Figure 3B

113

Figure 3C

1111

23

Figure 4A

1112

24

Figure 4B

1113

25

Figure 4C